# EUROPÄISCHE PATENTSCHRIFT

(11) **EP 0 882 105 B1**
(45) Veröffentlichungstag und Bekanntmachung des Hinweises auf die Patenterteilung: **24.11.1999**
(21) Anmeldenummer: 97921738.7
(22) Anmeldetag: 24.04.1997
(51) Int. Cl.: C09D 151/08, C08F 283/12

(54) **VORVERNETZTE SILICONELASTOMER-PARTIKEL MIT ORGANOPOLYMERHÜLLE ALS FORMULIERUNGSBESTANDTEIL IN WÄSSRIGEN LACKZUBEREITUNGEN**
PREVIOUSLY CROSS-LINKED SILICONE ELASTOMER PARTICLES WITH AN ORGANOPOLYMER SHEATH AS A CONSTITUENT FOR FORMULATING AQUEOUS LACQUER COMPOSITIONS
PARTICULES D'ELASTOMERE DE SILICONE PRERETICULEES A ENVELOPPE ORGANOPOLYMERE S'UTILISANT COMME CONSTITUANT DE FORMULATION DE PEINTURES AQUEUSES

(30) Priorität: 30.04.1996 DE 19617379
(43) Veröffentlichungstag der Anmeldung: 09.12.1998
(73) Patentinhaber: Wacker-Chemie GmbH, 81737 München (DE)
(72) Erfinder: GECK, Michael, D-84489 Burghausen (DE); GOEBLMEIER, Walter, D-84329 Wurmannsquick (DE); DEUBZER, Bernward, D-84489 Burghausen (DE); PATRICK, Ekkehard, D-84508 Burgkirchen (DE); OSWALDBAUER, Helmut, D-94166 Stubenberg (DE)
(74) Vertreter: Schuderer, Michael, Dr.
(86) Internationale Anmeldenummer: EP9702093
(87) Internationale Veröffentlichungsnummer: WO9741183

(56) Entgegenhaltungen:
- EP-A- 0 217 257
- EP-A- 0 630 940
- WO-A-90/08810
- DE-A- 2 310 213
- FR-A- 1 505 881

## Beschreibung

Die Erfindung betrifft die Verwendung von vorvernetzten Siliconelastomer-Partikeln mit Organopolymerhülle als Formulierungsbestandteil in Wasserlack-Zusammensetzungen auf der Basis von wasserlöslichen oder wasserverdünnbaren Bindemitteln.

"Wasserlacke" enthalten Bindemittel, die entweder wasserlöslich oder wasserverdünnbar sind; zu den wasserverdünnbaren Bindemitteln zählen emulgierte bzw. selbstemulgierbar eingestellte Harze und Harzkomponenten sowie wäßrige Dispersionen. Beispiele für wasserlösliche Bindemittel sind modifizierte Alkydharze, Acrylatharze, lineare und verzweigte gesättigte Polyesterharze, Epoxidharze, Schellack und modifizierte Phenolharze. Beispiele für wasserverdünnbare Bindemittel sind - gegebenenfalls modifizierte - dispergierte oder wasserdispergierbare, ungesättigte und gesättigte Polyesterharze, Alkydharzemulsionen, Polyurethandispersionen, Einkomponenten-E-poxidharzemulsionen, emulgierbare Zweikomponenten-Epoxidharzsysteme, dispergierbare Alkyd-, Phenol-, Melamin- und Harnstoffharze, (Meth)Acrylatdispersionen, (Meth)Acrylat-Copolymer-Dispersionen, Polystyrol- und Styrol-Copolymer-Dispersionen, Poly(vinylether)-Dispersionen, sowie Polyvinylchlorid- und Polyvinylidenchlorid-Dispersionen.

Neben wasserlöslichen oder wasserverdünnbaren Bindemitteln enthalten Wasserlacke in der Regel Pigmente, Füllstoffe, wasserlösliche Vernetzer und Vernetzungskatalysatoren und weitere Additive, wie beispielsweise Verlaufs- und Entlüftungshilfsmittel sowie Netzmittel.

Diese Zusammensetzungen werden in wäßriger Form z.B. auf metallische Substrate, mineralische Substrate, Kunststoffe, Holz, Papier oder Glas aufgebracht. Nach Auftrag trocknet der wäßrige Film zu einem festen Lackfilm. Bei Umgebungstemperatur (Raumtemperatur) trocknende Filme werden nach Lufttrocknung gegebenenfalls bei Temperaturen bis 100°C nachgetrocknet/getempert. Für andere Wasserlacktypen können noch höhere Temperaturen (120-220°C) zur Filmbildung notwendig sein, wenn hierzu die chemische Reaktion (Nachvernetzung) von zwei oder mehreren Bindemittelkomponenten erforderlich ist.

Bei den angeführten wasserlöslichen und wasserverdünnbaren Bindemitteln handelt es sich überwiegend um thermoplastische oder duromere Polymere, die generell hart, aber spröde sind. Für die Verbesserung der Lackeigenschaften ist daher häufig eine Zähmodifizierung der Polymersysteme erforderlich. Silicone sind als Modifier für Thermoplasten und Duromere bekannt und von besonderem Interesse, da diese nicht nur die Schlagzähigkeit erhöhen, sondern auch Tieftemperaturflexibilität, Witterungsbeständigkeit, Beständigkeit gegen Temperaturwechselbeanspruchung und chemische Beständigkeit von thermoplastischen oder duromeren Organopolymer-Systemen verbessern. Allgemein von Nachteil ist allerdings die prinzipielle Unverträglichkeit von Siliconen mit Organopolymeren. Durch die Unverträglichkeit können bei der Anwendung Verlaufsstörungen auftreten, durch Migration der Silicone werden Haftungsprobleme und Probleme bei der Überlackierbarkeit hervorgerufen.

In der DE-A 3922285 (= GB-A 2222167) (Dow Corning, offengelegt am 25.01.90) wird die bekannte Unverträglichkeit von Siloxanen mit Organopolymeren für dekorative Zwecke genutzt; es wird ein Anstrichmittel aus einer wäßrigen Dispersion eines filmbildenden polymeren Materials und aus Polydiorganosiloxan zur Erzielung eines gehämmerten Oberflächeneffekts beschrieben. Derartige Polysiloxane sind zur Zähmodifizierung von Wasserlacken nicht geeignet, da keine diskreten Partikel, sondern das Polysiloxan emulgiert als Flüssigkeit in der Wasserphase vorliegt.

In der für die Zähmodifizierung notwendigen Einsatzmenge schwitzen diese Verbindungen aus dem Lackfilm aus.

In der EP-A 586048 (Shin Etsu, veröffentlicht am 09.03.94) werden diol-funktionelle Siliconöle als Additive für Wasserlacke zur Erniedrigung der Oberflächenspannung und Verbesserung der Substratbenetzbarkeit beschrieben; diese Siloxane zeigen in dieser etablierten Anwendung im Vergleich zu Polyether-modifizierten Siliconölen bessere Verlaufseigenschaften. Zur Zähmodifizierung sind solche, in emulgierter Form vorliegenden, Siloxane nicht geeignet. Weiter wird beschrieben, daß in Einsatzmengen > 5 Gew% die mechanische Festigkeit des damit modifizierten Polymerfilms abnimmt.

In der WO-A 93/14169 (Crompton Garland Ltd., veröffentlicht am 22.07.93) wird eine Zubereitung aus einer vernetzbaren wäßrigen Phenolharzemulsion und einer Siliconharzemulsion beschrieben. Bei der Vernetzung der Phenolharz-Komponente findet eine chemische Anbindung des Silicons an das Phenolharz statt, wodurch der Siliconanteil in der Phenolharz-Matrix als Weichmacher eingeschlossen wird. In der US-A 4803233 (Dow Corning, erteilt am 07.02.89) werden wäßrige Gemische beschrieben, welche Organopolymer, Siliconharz und eine Kombination aus drei verschiedenen nichtionischen Emulgatoren enthalten. Der Siliconharzzusatz bewirkt - z.T erst nach thermischer Behandlung der homogenen Blends - abhängig von Polymersystem und Siliconanteil verbesserte Zugfestigkeit, Haftung und Korrosionsbeständigkeit der Lacke.

Eine Verbesserung der Schlagzähigkeit bei gleichzeitigem Erhalt der Härte wird weder in der WO-A 93/14169 noch in der US-A 4803233 beschrieben. Eine kontrollierte Mikrophasenseparation ist hier nicht gegeben, da es sich nicht um Organopolymer-verträgliche Modifier mit partikulärer Struktur handelt.

In EP-A 541395 (Takemoto, veröffentlicht am 12.05.93) werden wäßrige Beschichtungsmittel für thermoplastische Polyesterfilme auf Basis wäßriger Emulsionen von Polysiloxan-Polyvinyl-Pfropfcopolymeren beschrieben. Durch diese wäßrigen Bindemittelsysteme werden Oberflächeneigenschaften der Polyesterfilme, wie Glätte, Trenneigenschaften, sowie wasser- und ölabweisende Eigenschaften, verbessert. Die Pfropfcopolymeren werden hier nicht als Modifier für Organopolymer-Bindemittel in Wasserlakken eingesetzt, sondern als wäßriges Beschichtungsmittel verwendet, mit dem bestimmte Oberflächeneigenschaften bei der Auftragung auf thermoplastische Polymerfilme erzielt werden können.

In der WO-A 90/08810 (ICI Australia Operations Proprietary Ltd., veröffentlicht am 09.08.90) werden wäßrige Beschichtungsmittel auf der Basis von siliconhaltigen Polymeren, sogenannten "Multi-Polymer"-Partikeln, beschrieben. Die "Multi-Polymer-Partikel" werden durch Polymerisation der Monomere in einem Gemisch mit Siliconpolymer hergestellt. Der Siliconbestandteil muß hierbei dem/den Monomeren bereits vor der Polymerherstellung zugegeben werden und kann nicht als Formulierungsbestandteil (beliebigen) wäßrigen Bindemittelsystemen zugesetzt werden. Der Siliconanteil in den hier erhaltenen wasserverdünnbaren Bindemittelsystemen verbessert z.B. die UV-Beständigkeit der Lacke; eine Verbesserung der Schlagzähigkeit wird nicht beschrieben. Eine kontrollierte Microphasenseparation ist hier wiederum nicht gegeben, da als Siliconkomponenten Flüssigkeiten oder Harze eingesetzt werden, bei denen es sich nicht um organopolymer-verträgliche Modifier mit partikulärer Struktur handelt.

Die EP-A 630940 (Bayer AG, veröffentlicht am 28.12.94) befaßt sich mit Mischungen aus a) einem radikalisch vernetzbaren Fluorkautschuk und b) einem Silicon/Acrylat-Kern/Mantel-Elastomer, die direkt in Form wäßriger Dispersionen als Additive für Beschichtungskomponenten eingesetzt werden können. Die offenbarte Matrix a) ist aber nicht wasserlöslich oder wasserverdünnbar, sondern es liegen immer Dispersionen bzw. Emulsionen vor.

Der Erfindung lag die Aufgabe zugrunde, Modifier für wäßrige Beschichtungsmittel auf der Basis von Organopolymer-Bindemitteln, sogenannten Wasserlacken, zur Verfügung zu stellen, welche mit dem Organopolymer-Bindemittel gut verträglich sind und mit denen sich die Schlagzähigkeit der damit erhältlichen Filme verbessern läßt, bei gleichzeitigem Erhalt der bestehenden, gewünschten Polymereigenschaften, wie Härte, Formbeständigkeit und mechanische Festigkeit.

Gegenstand der Erfindung ist die Verwendung von vorvernetzten Siliconelastomer-Partikeln mit Organopolymerhülle als Formulierungsbestandteil in Wasserlack-Zusammensetzungen auf der Basis von wasserlöslichen oder wasserverdünnbaren Bindemitteln, wobei die Siliconelastomer-Partikel
a) 5 bis 95 Gew%, bezogen auf das Gesamtgewicht des Copolymerisats, eines Kernpolymeren der allgemeinen Formel (R₂SiO_{2/2})ₓ^{·}(RSiO_{3/2})_{y}^{·}(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copolymerisats, einer Hülle aus Organopolymer ein- oder mehrfach ethylenisch ungesättigter Monomere,
enthalten, und R gleiche oder verschiedene einwertige Alkyl- oder Alkenyl-Reste mit 1 bis 6 C-Atomen, Aryl-Reste oder substituierte Kohlenwasserstoffreste aus der Gruppe umfassend halogenierte Kohlenwasserstoffreste, Mercaptoalkylreste, Cyanoalkylreste, Aminoalkylreste, Acyloxyalkylreste, Hydroxyalkylreste bedeutet.

Ein weiterer Gegenstand der Erfindung sind Wasserlack-Zusammensetzungen auf der Basis von wasserlöslichen oder wasserverdünnbaren Bindemitteln, welche als Formulierungsbestandteil vorvernetzte Siliconelastomer-Partikel mit Organopolymerhülle enthalten, wobei die Siliconelastomer-Partikel
a) 5 bis 95 Gew%, bezogen auf das Gesamtgewicht des Copolymerisats, eines Kernpolymeren der allgemeinen Formel (R₂SiO_{2/2})ₓ^{·}(RSiO_{3/2})_{y}^{·}(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copolymerisats, einer Hülle aus Organopolymer ein- oder mehrfach ethylenisch ungesättigter Monomere,
enthalten, und R gleiche oder verschiedene einwertige Alkyl- oder Alkenyl-Reste mit 1 bis 6 C-Atomen, Aryl-Reste oder substituierte Kohlenwasserstoffreste aus der Gruppe umfassend halogenierte Kohlenwasserstoffreste, Mercaptoalkylreste, Cyanoalkylreste, Aminoalkylreste, Acyloxyalkylreste, Hydroxyalkylreste bedeutet.

Die als Formulierungsbestandteil eingesetzten vorvernetzten Siliconelastomer-Partikel mit Organopolymerhülle sowie Verfahren zu deren Herstellung sind in der EP-A 492376 (US-A 5223586) beschrieben. Unter vorvernetzte Siliconelastomer-Partikel ist dabei zu verstehen, daß diese über den Anteil an (RSiO_{3/2})- und (SiO_{4/2})-Einheiten vernetzt sind.

Die Siliconelastomer-Partikel mit Organopolymerhülle enthalten vorzugsweise
a) 20 bis 80 Gew%, bezogen auf das Copolymer-Gesamtgewicht, eines Kernpolymeren (R₂SiO_{2/2})ₓ^{·}(RSiO_{3/2})_{y}^{·}(SiO_{4/2})_{z} mit x = 50 bis 99 Mol%, y = 1 bis 50 Mol%; z = 0 bis 20 Mol%; und
b) 20 bis 80 Gew%, bezogen auf das Copolymer-Gesamtgewicht, einer Hülle aus Organopolymer ein- oder mehrfach ethylenisch ungesättigter Monomere,
wobei R die obengenannte Bedeutung hat.

Vorzugsweise sind die Reste R Alkylreste wie der Methyl-, Ethyl-, n-Propyl-, Isopropyl-, n-Butyl-, sec.-Butyl-, Amyl-, Hexylrest; Alkenylreste wie der Vinyl-, Allyl-, Butenyl- und 1-Hexenylrest; Arylreste wie der Phenylrest; oder substituierte Kohlenwasserstoffreste, wie halogenierte Kohlenwasserstoffreste, Mercaptoalkylreste, Cyanoalkylreste, Aminoalkylreste, Acyloxyalkylreste, Hydroxyalkylreste.

Besonders bevorzugt sind die Reste Methyl, Ethyl, Propyl, Phenyl, Vinyl, Allyl, 1-Hexenyl, 3-Methacryloxypropyl und 3-Mercaptopropyl, wobei weniger als 30 Mol% der Reste im Siloxanpolymerisat Vinyl-, 3-Methacryloxypropyl oder 3-Mercaptopropylgruppen sind.

Als Monomere für den organischen Polymeranceil b) werden vorzugsweise Acrylsäureester oder Methacrylsäureester sowie Mono-und Diester der Fumar- und Maleinsäure von aliphatischen Alkoholen und Diolen mit 1 bis 10 C-Atomen, Acrylsäure- und Methacrylsäureamide, Acrylnitril, Styrol, p-Methylstyrol, o-Methylstyrol, Divinylbenzol Vinylacetat, Vinylpropionat, Maleinimid, Vinylchlorid, Mono- und Divinylether, Ethylen, Butadien, Isopren und Chloropren eingesetzt. Besonders bevorzugt sind Styrol sowie Acrylsäureester und Methacrylsäureester von aliphatischen Alkoholen mit 1 bis 4 C-Atomen, beispielsweise Methyl(meth)acrylat, Butyl(meth)acrylat und Glycidyl(meth)-acrylat. Als organischer Polymeranteil sind sowohl Homopolymerisate als auch Mischpolymerisate der genannten Monomere geeignet.

Die feinteiligen Pfropfcopolymerisate haben vorzugsweise einen mittleren Teilchendurchmesser von 10 bis 300 nm, besonders bevorzugt von 30 bis 150 nm. Die Teilchengrößen können im obengenannten Bereich schwanken, vorzugsweise liegt eine monomodale Teilchengrößenverteilung mit einem Polydispersitätsindex von maximal σ₂ = 0.2 vor.

Die Herstellung der Polysiloxan-Pfropfgrundlage erfolgt nach dem Emulsionspolymerisationsverfahren durch Zudosieren des entsprechenden Gemisches monomerer Silane vom Typ RₐSi(OR')₄₋ₐ, wobei a = 0, 1 oder 2 ist, oder gegebenenfalls niedermolekularer Siloxane der allgemeinen Formel (R₂SiO)ₙ mit n = 3 bis 8, zu einer bewegten Emulgator/Wasser-Mischung. Der Rest R hat die bereits genannten Bedeutungen. R' steht für Alkylreste mit 1 bis 6 C-Atomen, Arylreste oder substituierte Kohlenwasserstoffreste, bevorzugt sind Methyl-, Ethyl- und Propylrest. Das Silan oder das Silan- bzw. Silan/Siloxan-Gemisch wird dosiert zugegeben. Die Emulsionspolymerisation wird bei einer Temperatur von 30 bis 90°C, vorzugsweise 60 bis 85°C, und vorzugsweise bei Normaldruck durchgeführt. Der pH-Wert der Polymerisationsmischung beträgt von 1 bis 4, vorzugsweise von 2 bis 3. Geeignete Emulgatoren und deren Einsatzmengen sind in der EP-A 492376 beschrieben.

Um eine monomodale Teilchengrößenverteilung zu erzielen, wird während der Herstellung der Polysiloxan-Pfropfgrundlage vorzugsweise auf einen Homogenisierschritt verzichtet. In einer weiteren bevorzugten Ausführungsform werden nach Abschluß der Polymerisation der Pfropfgrundlage dabei gebildeter Alkohol und gegebenenfalls weitere flüchtige Bestandteile destillativ entfernt.

Beispiele geeigneter Silane sind für Silane der allgemeinen Formel R₂Si(OR')₂ Dimethyldiethoxysilan oder Dimethyldimethoxysilan, für Oligomeren der Formel (R₂SiO)ₙ mit n = 3 bis 8 Octamethylcyclotetrasiloxan oder Hexamethylcyclotrisiloxan, für Silane der allgemeinen Formel RSi(OR')₃ Methyltrimethoxysilan, Phenyltriethoxysilan, 3-Chlorpropyltrimethoxysilan, 3-Mercaptopropyltrimethoxysilan, oder Methacryloxypropyltrimethoxysilan, und für Silane der allgemeinen Formel Si(OR')₄ Tetramethoxysilan oder Tetraethoxysilan.

Im letzten Schritt des Herstellungsverfahrens werden die bereits genannten ethylenisch ungesättigten Monomere auf die Polysiloxanpfropfgrundlage aufgepfropft. Die Pfropfung erfolgt nach dem Emulsionspolymerisationsverfahren in Gegenwart von wasserlöslichen oder monomerlöslichen Radikalinitiatoren nach der in der EP-A 492376 beschriebenen Verfahrensweise. Die vorvernetzten Siliconelastomere mit Organopolymerhülle werden mit dieser Verfahrensweise in Form deren wäßrigen Dispersionen erhalten. Vorzugsweise wird ein Feststoffgehalt der wäßrigen Dispersionen von 10 - 60 Gew%, besonders bevorzugt 15 - 50 Gew%, eingestellt.

Der Vernetzungsgrad des Siliconkerns bestimmt dessen elastische Eigenschaften und kann durch geeignete Wahl der Ausgangskomponenten, entsprechende Alkoxysilane und/oder Siloxane zum Erhalt von (RSiO_{3/2})- oder SiO_{4/2})-Einheiten, in dem Fachmann bekannter Weise gezielt eingestellt werden. Der Einbau von Silanbausteinen mit olefinisch ungesättigten Doppelbindungen, beispielsweise Vinyl- oder 3-Methacryloxypropylresten, gestattet in der nachfolgenden Pfropfpolymerisation eine chemische Anbindung der Organopolymerhülle an den Siliconkern durch kovalente Bindungen. Durch Wahl geeigneter Monomere für den Aufbau der organischen Polymerhülle b) können die Organopolymerhüllen gezielt maßgeschneidert werden.

So kann durch Pfropfung einer Mischpolymerisat-Hülle, beispielsweise aus Methylmethacrylat (hohe Tg) und n-Butylacrylat (niedere Tg) auf einen vernetzten Siliconkern die Erweichungstemperatur der Polymerhülle gezielt eingestellt und damit den Erfordernissen bei der Verarbeitung der Wasserlack-Komponenten und den Lackeigenschaften exakt angepaßt werden. Durch Pfropfung einer Mischpolymerisat-Hülle, beispielsweise aus Methylmethacrylat und Glycidylmethacrylat, auf einen vernetzten Siliconkern kann durch die mit Glycidylmethacrylat eingeführten Epoxidfunktionen in der Organopolymerhülle zum einen eine Matrixanbindung zwischen Modifier-Partikel und Bindemittelharz der Wasserlack-Zusammensetzung erzielt werden, zum anderen können diese Modifier-Partikel als Vernetzer in Bindemitteln auf Polyesterharz-Basis wirken.

Am meisten bevorzugt werden demgemäß vernetzte Siliconelastomerpartikel mit einem Kern aus (R₂SiO_{2/2})ₓ^{·}(RSiO_{3/2})_{y} mit x = 80 - 99 Mol% und y = 1 - 20 Mol%, wobei R gleich oder verschieden sein kann und die Bedeutung R = Methyl und/oder 3-Methacryloxypropyl hat, und mit einer Hülle aus Poly(methylmethacrylat) oder Mischpolymerisat-Hüllen aus Methymethacrylat und Butylacrylat bzw. Glycidylmethacrylat.

Der Anteil des Kernpolymeren, bezogen auf das Copolymergesamtgewicht beträgt besonders bevorzugt 50 - 80 Gew%, der Anteil der Organopolymer-Hülle somit besonders bevorzugt 20 - 50 Gew%. Dies entspricht einem Organopolymer-Pfropfgrad von 25 - 100 %.

Der Additivcharakter der vorvernetzten Siliconelastomer-Partikel mit Organopolymerhülle und die einfache Einarbeitung als wäßrige Dispersion gestatten den Einsatz mit allen gängigen Bindemittelsystemen für Wasserlacke. Beispiele für Bindemittelsysteme für Wasserlacke sind für wasserlösliche Bindemittel modifizierte Alkydharze, Acrylatharze, lineare und verzweigte gesättigte Polyesterharze, Epoxidharze, Schellack und modifizierte Phenolharze. Beispiele für wasserverdünnbare Bindemittel sind - gegebenenfalls modifizierte - dispergierte oder wasserdispergierbare, ungesättigte und gesättigte Polyesterharze, Alkydharzemulsionen, Polyurethandispersionen, Einkomponenten-Epoxidharzemulsionen, emulgierbare Zweikomponenten-E-poxidharzsysteme, dispergierbare Alkyd-, Phenol-, Melamin- und Harnstoffharze, (Meth)Acrylatdispersionen, (Meth)Acrylat-Copolymer-Dispersionen, Polystyrol- und Styrol-Copolymer-Dispersionen, Poly(vinylether)-Dispersionen, sowie Polyvinylchlorid- und Polyvinylidenchlorid-Dispersionen.

Zur Modifizierung werden die vorvernetzten Siliconelastomere mit Organopolymerhülle vorzugsweise in Form deren wäßrigen Dispersionen, gegebenenfalls als Dispersionspulver, im allgemeinen in einer Menge von 0.5 bis 50 Gew.-%, vorzugsweise von 1.0 bis 30 Gew.-%, jeweils Siliconelastomer-Anteil bezogen auf das Gesamtgewicht von Siliconelastomer- und Bindemittelanteil, zur Wasserlack-Rezeptur zugegeben. Für Wasserlacke geeignete Rezepturen sind dem Fachmann beispielsweise aus H. Kittel (Hrsg.), Lehrbuch der Lacke und Beschichtungen, Band IV, Verlag W. A. Colomb, Berlin, Oberschwandorf, 1976 bekannt.

Die Zugabe erfolgt nach üblicher Verfahrensweise zur Formulierung von Wasserlacken unter Verwendung von Rührern oder Dispergierwerkzeugen. Die wäßrige Dispersion der vorvernetzten Siliconelastomere mit Organopolymerhülle kann dabei in beliebiger Reihenfolge mit den Komponenten der Wasserlack-Rezeptur, wie Bindemittel(n), Wasser, Vernetzer, Katalysator, Pigment, Verdickungsmittel, Füllstoff vermischt werden. Vorzugsweise wird in einem Temperaturbereich von +1°C bis +90°C, insbesonders von +5°C bis +60°C, gemischt (compoundiert).

Die erfindungsgemäß modifizierten Wasserlacke können im Prinzip überall dort eingesetzt werden, wo auch herkömmliche lösemittelbasierende Lacke oder nicht-modifizierte Wasserlacke Verwendung finden:
Sie finden insbesondere Verwendung zur Metallackierung großer Stahlkonstruktionen, (z.B. Brücken, Tanks, Kräne und Fördereinrichtungen, Pipelines, Bergbau- und Ölfördereinrichtungen, Teile von Stahlwerken und chemischen Anlagen), zur Metallackierung im Automobil-Sektor (Klarlack, Decklack, Innenlack, Füller, Steinschlag- und Unterbodenschutz, Reparaturlakke für z.B. PKW, LKW, Busse, Baustellen- und landwirtschaftliche Nutzfahrzeuge) und von Schienenfahrzeugen, Frachtcontainern, Flugzeugen, Schiffen (jeweils Außenlacke), ferner zur Lackierung von metallischen Substraten vor deren Weiterverarbeitung (coil coating), von Haushaltsgeräten (z.B. Tiefkühltruhen, Kühlschränken, Spulmaschinen, Waschmaschinen, Elektroherden, etc.) und von metallischen Verpackungen (z.B. Fässern, Containern etc.). Sie finden weiterhin Verwendung zur Lackierung von Möbeln (Holzmöbel, Metallmöbel, Lampengehäuse etc.), von Gebäudeteilen innen und außen (aus Holz, Stahl, Leichtmetall- und Leichtmetallegierungen, Kunststoffen, Beton, Mörtel und Putz, z.B. Fensterrahmen, Fassadenverblendungen, Türen, Tore, Dachrinnen, Böden, Treppen, Fassadenteile, Wände, Dekken, Heizungen und Radiatoren, Tanks, Leitungen), von Fahrrädern, Schilder, Felgen.

Die Prüfergebnisse in den Beispielen belegen, daß die (Schlag)Zähigkeit der Wasserlacke durch Zusatz von vorvernetzten Siliconelastomer-Partikeln mit Organopolymerhülle verbessert wird, wobei die Haftung der Lacksysteme und ihre Oberflächeneigenschaften nicht und die Härte der Lacksysteme nur geringfügig beeinflußt werden. Mit den Vergleichsbeispielen wird gezeigt, daß durch Zusatz von Siliconelastomer-Partikeln ohne Organopolymerhülle zwar auch die (Schlag)Zähigkeit verbessert wird, daß aber die Härte der Lacke und ihre Oberflächeneigenschaften deutlich nachteilig beeinflußt werden; somit ist neben der kontrollierten Microphasenseparation auch eine gute Verträglichkeit der Modifier-Partikel mit der Polymermatrix im der aufgetrockneten Lackschicht erforderlich.

Die guten Ergebnisse in den Beispielen sind darauf zurückzuführen, daß der erfindungsgemäße Zähmodifier aufgrund der vernetzten Siliconphase in Form separater, diskreter Mikrophasen mit definierter Partikelgröße und -form in die Thermoplast-bzw. Duromersysteme eingebaut wird. Nur bei vollständiger Phasenseparation tritt keine unerwünschte Weichmachung der Polymermatrix auf, die einen Verlust bzw. eine negative Beeinflussung der Eigenschaften der Polymermatrix wie Härte, Formbeständigkeit und mechanische Festigkeit zur Folge hätte. Weiterhin wird mittels der Organopolymer-Hülle eine gute Verträglichkeit des partikulären Modifiers mit der Polymermatrix des Lackbindemittels erhalten. Für die Mischbarkeit/kolloidale Verträglichkeit der vorvernetzten Siliconelastomer-Partikel in Dispersionsform mit wasserlöslichen bzw. wasserverdünnbaren Bindemitteln ist die Organopolymerhülle zwar nicht zwingend erforderlich, wohl aber für die Polymerverträglichkeit der Partikel mit der Matrix nach Auftrocknung. Durch die Partikelstruktur und die Polymerverträglichkeit der Partikel werden die Domänengrößen der Modifierphase über den Partikeldurchmesser exakt definiert. Kontaminationsprobleme, Haftungsprobleme, Sedimentationsprobleme und Verlaufsstörungen treten nicht auf, da die vorvernetzten Siliconelastomer-Partikel vollständig mit einer Organopolymer-Hülle gepfropft sind. Die Überlakkierbarkeit der resultierenden Lacke ist gegeben.

Die nachfolgenden Beispiele dienen der weiteren Erläuterung der Erfindung:

### Beispiele 1 - 2, Vergleichsbeispiele 1 - 3:

In den Beispielen 1 und 2 sowie den Vergleichsbeispielen 1 bis 3 wurden Polyesterlack-Formulierungen der in Tabelle 1 genannten Zusammensetzungen hergestellt.
In den erfindungsgemäßen Beispielen wurde Dispersion A eingesetzt. In den Vergleichsbeispielen 2 und 3 wurde Dispersion B eingesetzt. Die Lackformulierung von Vergleichsbeispiel 1 entspricht der von herkömmlichen, unmodifizierten Wasserlacken.

### Dispersion A:

Wäßrige Dispersion aus Siliconpartikeln mit einem Kern aus [R₂SiO_{2/2}]ₓ[R'SiO_{3/2}]_{y} (x = 95 Mol-%, y = 5 Mol-%; R = Methyl, R' = Methyl und 3-Methacryloxypropyl) und einer Polymethylmethacrylathülle (PMMA-Pfropfgrad 50 Gew.-%); die Primärpartikelgröße beträgt ca. 100 nm, der Feststoffgehalt an Siliconpartikeln mit Organopolymerhülle beträgt 26.3 %.

### Dispersion B:

Wäßrige Dispersion aus Siliconpartikeln, zusammengesetzt aus [R₂SiO_{2/2}]ₓ[RSiO_{3/2}]_{y} (x = 95 Mol-%, y = 5 Mol-%; R = Methyl); die Primärpartikelgröße beträgt ca. 100 nm, der Feststoffgehalt an Siliconpartikeln beträgt 19 %.

Zur Herstellung der in Tabelle 1 gelisteten wäßrigen Lackformulierungen (Beispiele 1-2, Vergleichsbeispiele 1-3) wurden die darin genannten Komponenten 20 bis 30 Minuten bei Umgebungstemperatur mittels eines Dissolvers zusammengemischt.

Zur Testung wurden die wäßrigen Lackformulierungen mittels eines Spiralfilmziehrakels auf Metallbleche aufgetragen. Die Trocknung erfolgte bei Umgebungstemperatur (22°C), die Prüfungen wurden 3 Tage nach Blechauftrag durchgeführt. Die Prüfergebnisse sind in Tabelle 1 zusammengefaßt.

Es wurden folgende Prüfverfahren angewendet:

### Oberflächenbeschaffenheit:

Die Oberflächenbeschaffenheit wurde durch visuelle Beurteilung der Lackoberfläche qualitativ bewertet.

### Überstreichbarkeit:

Zur Beurteilung der Überstreichbarkeit wurden die mit den Lackformulierungen gemäß Beispiel 1/2 und Vergleichsbeispiel 1-3 beschichteten Metallbleche mit der jeweils identischen Lackformulierung nochmals überstrichen. Die Überstreichbarkeit wurde durch visuelle Betrachtung qualitativ bewertet.

### Zwischenhaftung nach Überstreichen:

Zur Beurteilung der Zwischenhaftung wurde nach 3 Tagen Trocknungszeit überprüft, ob sich die obere Lackschicht durch Schälen mittels eines Federmessers partiell abtragen läßt. Die Zwischenhaftung wurde dann als "gut" bewertet, wenn keinerlei Abtrag feststellbar war.

### Reverse Impact:

Der Reverse Impact wurde durch Kugelschlagprüfung mit dem ERICHSEN-Kugelschlag-Prüfgerät Typ 304 ermittelt.

### Pendelhärte nach König:

Die Prüfung der Pendelhärte nach König erfolgte gemäß DIN 53137.

### Erichsentiefung:

Die Testung der Erichsentiefung erfolgte nach DIN ISO 1520.

### Gitterschnitt:

Der Gitterschnitt wurde mit dem Verfahren gemäß DIN 53151 ermittelt.

Die Ergebnisse zeigen, daß die (Schlag-)Zähigkeit (reverse impact) durch Zusatz der erfindungsgemäßen Siliconelastomer-Partikel mit PMMA-Hülle (Beispiele 1 und 2) deutlich verbessert wird, wobei die Lackhärte nur wenig erniedrigt wird und Haftung sowie Oberflächeneigenschaften der Lacke nicht negativ beeinflußt werden. Bei der Verwendung von Siliconelastomer-Partikeln ohne Organopolymerhülle (Vergleichsbeispiele 2 und 3) wird zwar die (Schlag-)Zähigkeit in vergleichbarem Umfang verbessert, Lackhärte, Oberflächeneigenschaften und Haftung nach Überstreichen werden jedoch deutlich nachteilig beeinflußt.

**Tabelle 1:**

| | Beispiel 1 | Beispiel 2 | Vergleichsbeispiel 1 | Vergleichsbeispiel 2 | Vergleichsbeispiel 3 |
|---|---|---|---|---|---|
| **Komponenten** [GewTeile] | | | | | |
| 1. Halwedrol OX47-2/40W ^{a)} (40 % in H₂O) | 50.0 | 50.0 | 50.0 | 50.0 | 50.0 |
| 2. Kronos TiO₂ - 2130^{b)} | 25.0 | 25.0 | 25.0 | 25.0 | 25.0 |
| 3. Dispersion A | 12.5 | 23.0 | - | - | - |
| 4. Dispersion B | - | - | - | 12.5 | 23.0 |
| 5. Reolate 255 ^{c)} | 0.5 | 0.5 | 0.5 | 0.5 | 0.5 |
| Anteil an Siliconelastomerpartikeln mit PMMA-Hülle bez. auf Bindemittel (fest/fest) in % | 16 | 30 | - | - | - |
| Anteil an Siliconelastomerpartikeln bez. auf Bindemittel (fest/fest) in % | - | - | - | 12 | 22 |
| Siliconanteil bez. auf Bindemittel (fest/fest) | 11 | 20 | - | 12 | 22 |
| Trockenfilmschichtdicke in µm | 26 | 26 | 28 | 32 | 31 |

| **Mechanische Werte** | | | | | |
|---|---|---|---|---|---|
| Reverse Impact (in x lbs) | 40 | 60 | 12 | 46 | 60 |
| Pendelhärte nach König | 56 | 54 | 67 | 46 | 42 |
| Erichsentiefung (mm, Stahlblech) | > 6 | > 6 | > 6 | > 6 | > 6 |
| Gitterschnitt | Gt 0 | Gt 0 | Gt 0 | Gt 0 | Gt 0 |
| Oberfläche | glatt | glatt | glatt | rauh | rauh |
| Überstreichbarkeit | ja | ja | ja | ja | ja |
| Zwischenhaftung nach überstreichen | gut | gut | gut | mäßig | mäßig |

| | | | | | |
|---|---|---|---|---|---|
| ^{a)} Fettsäure-modifiziertes Polyesterharz der Fa. Hüttenes-Albertus Lackrohstoffe | | | | | |
| ^{b)} TiO₂-Pigment der Fa. Kronos-Titan | | | | | |
| ^{c)} Verdickungsmittel auf Polyacrylat-Basis der Kronos-Titan | | | | | |

### Beispiele 3 und 4, Vergleichsbeispiel 4:

Es wurde analog der Beispiele 1/2 und Vergleichsbeispiele 1-3 vorgegangen, mit dem Unterschied, daß Wasserlacke auf Basis eines Zweikomponenten-Epoxidharzlackes getestet wurden. In den erfindungsgemäßen Beispielen 3 und 4 wurde wiederum Dispersion A zur Modifizierung eingesetzt. Die Lackformulierung von Vergleichsbeispiel 4 wurde nicht modifiziert.

Zur Herstellung der in Tabelle 2 gelisteten wäßrigen Lackformulierungen (Beispiele 3-4, Vergleichsbeispiel 4) wurden die darin genannten Komponenten 20 bis 30 Minuten bei Umgebungstemperatur mittels eines Dissolvers zusammengemischt. Die wäßrigen Lackformulierungen wurden mittels eines Spiralfilmziehrakels auf Aluminium- sowie auf Metallbleche aufgetragen. Die Trocknung erfolgte bei Umgebungstemperatur (22°C). Die Prüfungen wurden 3 Tage nach Blechauftrag analog der obengenannten Prüfvorschriften durchgeführt. Die Prüfergebnisse sind in Tabelle 2 zusammengefaßt.

Die Ergebnisse zeigen, daß die (Schlag-)Zähigkeit (reverse impact) durch Zusatz der erfindungsgemäßen Siliconelastomer-Partikel mit PMMA-Hülle (Beispiele 3 und 4) deutlich verbessert wird, wobei die Lackhärte nur wenig erniedrigt wird.

**Tabelle 2**

| | Beispiel 3 | Beispiel 4 | Vergleichsbeispiel 4 |
|---|---|---|---|
| **Komponenten** [GewTeile] | | | |
| 1. Epires ER 8 (100 %ig) ^{a)} | 43.5 | 43.5 | 43.5 |
| 2. Borchigol VL 73 S^{b)} | 0.2 | 0.2 | 0.2 |
| 3. Kronos TiO₂ - 2160 ^{c)} | 45.0 | 45.0 | 45.0 |
| 4. Dispersion A | 15.25 | 30.50 | - |
| 5. Blanc Fix Micro ^{d)} | 10.0 | 10.0 | 10.0 |
| 6. Demineralisiertes Wasser | ca. 20 | ca. 20 | ca. 20 |
| 7. Epilink DP 700 (55 % in H2O) ^{e)} | 66.7 | 66.7 | 66.7 |
| Anteil an Siliconelastomerpartikeln mit PMMA- | 5.0 | 10.0 | - |
| Hülle bez. auf Bindemittel (fest/fest) in % | | | |
| Trockenfilmschichtdicke in µm (Metallblech) | 24 | 26 | 33 |
| Trockenfilmschichtdicke in µm (Aluminiumblech) | 23 | 24 | 33 |

| **Mechanische Werte** | | | |
|---|---|---|---|
| Reverse Impact (in x lbs) (Metallblech) | 66 | > 80 | 4 |
| Reverse Impact (in x lbs) (Aluminiumblech) | 40 | 46 | 4 |
| Pendelhärte nach König (Metallblech) | 89 | 89 | 118 |
| Pendelhärte nach König (Aluminiumblech) | 88 | 83 | 108 |

| | | | |
|---|---|---|---|
| ^{a)} 2K-Epoxidharzlack auf Basis Bisphenol A/F der Fa. Air Products | | | |
| ^{b)} Verlaufsmittel auf Basis Fettsäureester der Fa. Borchers | | | |
| ^{c)} TiO₂-Pigment der Fa. Kronos-Titan | | | |
| ^{d)} Füllstoff auf Basis Bariumsulfat der Fa. Sachtleben | | | |
| ^{e)} Polyaminaddukt-Härter der Fa. Air Products | | | |

## Patentansprüche

1. Verwendung von vorvernetzten Siliconelastomer-Partikeln mit Organopolymerhülle als Formulierungsbestandteil in Wasserlack-Zusammensetzungen auf der Basis von wasserlöslichen oder wasserverdünnbaren Bindemitteln, wobei die Siliconelastomer-Partikel
a) 5 bis 95 Gew%, bezogen auf das Gesamtgewicht des Copolymerisats, eines Kernpolymeren der allgemeinen Formel (R₂SiO_{2/2})ₓ^{·}(RSiO_{3/2})_{y}^{·}(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copolymerisats, einer Hülle aus Organopolymer ein- oder mehrfach ethylenisch ungesättigter Monomere,
enthalten, und R gleiche oder verschiedene einwertige Alkyl- oder Alkenyl-Reste mit 1 bis 6 C-Atomen, Aryl-Reste oder substituierte Kohlenwasserstoffreste aus der Gruppe umfassend halogenierte Kohlenwasserstoffreste, Mercaptoalkylreste, Cyanoalkylreste, Aminoalkylreste, Acyloxyalkylreste, Hydroxyalkylreste bedeutet.

2. Verwendung nach Anspruch 1, worin die vorvernetzten Siliconelastomer-Partikeln mit Organopolymerhülle in Form deren wäßrigen Dispersionen, mit einem Feststoffgehalt der wäßrigen Dispersionen von 10 - 60 Gew% verwendet werden.

3. Wasserlack-Zusammensetzungen auf der Basis von wasserlöslichen oder wasserverdünnbaren Bindemitteln, welche als Formulierungsbestandteil vorvernetzte Siliconelastomer-Partikel mit Organopolymerhülle enthalten, wobei die Siliconelastomer-Partikel
a) 5 bis 95 Gew%, bezogen auf das Gesamtgewicht des Copolymerisats, eines Kernpolymeren der allgemeinen Formel (R₂SiO_{2/2})ₓ^{·}(RSiO_{3/2})_{y}^{·}(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copo lymerisats, einer Hülle aus Organopolymer ein- oder mehrfach ethylenisch ungesättigter Monomere,
enthalten, und R gleiche oder verschiedene einwertige Alkyl- oder Alkenyl-Reste mit 1 bis 6 C-Atomen, Aryl-Reste oder substituierte Kohlenwasserstoffreste aus der Gruppe umfassend halogenierte Kohlenwasserstoffreste, Mercaptoalkylreste, Cyanoalkylreste, Aminoalkylreste, Acyloxyalkylreste, Hydroxyalkylreste bedeutet.

4. Verwendung gemäß Anspruch 1 und Wasserlack-Zusammensetzung gemäß Anspruch 3, worin die vorvernetzten Siliconelastomer-Partikel mit Organopolymerhülle
a) 20 bis 80 Gew%, bezogen auf das Copolymer-Gesamtgewicht, eines Kernpolymeren (R₂SiO_{2/2})ₓ^{·}(RSiO_{3/2})_{y}^{·}(SiO_{4/2})_{z} mit x = 50 bis 99 Mol%, y = 1 bis 50 Mol%; z = 0 bis 20 Mol%; und
b) 20 bis 80 Gew%, bezogen auf das Copolymer-Gesamtgewicht, einer Hülle aus Organopolymer ein- oder mehrfach ethylenisch ungesättigter Monomere,
enthalten, wobei R die obengenannte Bedeutung hat.

5. Verwendung gemäß Anspruch 1 und Wasserlack-Zusammensetzung gemäß Anspruch 3, worin die vorvernetzten Siliconelastomerpartikel einen Kern aus (R₂SiO₂/₂)ₓ ^{·} (RSiO_{3/2})_{y} mit x = 80 - 99 Mol% und y = 1 - 20 Mol%, wobei R gleich oder verschieden sein kann und die Bedeutung R = Methyl und/oder 3-Methacryloxypropyl hat, und eine Hülle aus Poly(methylmethacrylat) oder Mischpolymerisat-Hüllen aus Methylmethacrylat und Butylacrylat bzw. Glycidylmethacrylat, enthalten.

6. Verwendung gemäß Anspruch 1 und Wasserlack-Zusammensetzung gemäß Anspruch 3, worin die vorvernetzten Siliconelastomer-Partikel mit Organopolymerhülle einen mittleren Teilchendurchmesser von 10 bis 300 nm aufweisen.

7. Verwendung gemäß Anspruch 1 und Wasserlack-Zusammensetzung gemäß Anspruch 3, worin die vorvernetzten Siliconelastomer-Partikel mit Organopolymerhülle eine monomodale Teilchengrößenverteilung mit einem Polydispersitätsindex von maximal σ₂ = 0.2 aufweisen.

8. Verwendung gemäß Anspruch 1 und Wasserlack-Zusammensetzung gemäß Anspruch 3, worin die vorvernetzten Siliconelastomere mit Organopolymerhülle in einer Menge von 0.5 bis 50 Gew.-%, bezogen auf das Gesamtgewicht von Siliconelastomer- und Bindemittelanteil, in der Wasserlack-Rezeptur enthaltend Bindemittel, Wasser, Vernetzer, Katalysator, Pigment, Verdickungsmittel, Füllstoff eingesetzt werden.

9. Verwendung gemäß Anspruch 1 und Wasserlack-Zusammensetzung gemäß Anspruch 3, worin als Bindemittel wasserlösliche Bindemittel aus der Gruppe modifizierte Alkydharze, Acrylatharze, lineare und verzweigte gesättigte Polyesterharze, Epoxidharze, Schellack und modifizierte Phenolharze oder wasserverdünnbare Bindemittel aus der Gruppe ungesättigte und gesättigte Polyesterharze, Alkydharzemulsionen, Polyurethandispersionen, Einkomponenten-Epoxidharzemulsionen, emulgierbare Zweikomponenten-Epoxidharzsysteme, dispergierbare Alkyd-, Phenol-, Melamin- und Harnstoffharze, (Meth)Acrylatdispersionen, (Meth)Acrylat-Copolymer-Dispersionen, Polystyrol- und Styrol-Copolymer-Dispersionen, Poly(vinylether)-Dispersionen, sowie Polyvinylchlorid- und Polyvinylidenchlorid-Dispersionen enthalten sind.

## Claims

1. Use of precrosslinked silicone elastomer particles with an organic-polymer shell as a formulating constituent in aqueous coating compositions based on water-soluble or water-dilutable binders, where the silicone elastomer particles comprise
a) from 5 to 95% by weight, based on the overall weight of the copolymer, of a core polymer of the general formula (R₂SiO_{2/2})ₓ^{·}(RSiO_{3/2})_{y}^{·}(SiO_{4/2})_{z} where x = from 5 to 99.5 mol%, y = from 0.5 to 95 mol%, z = from 0 to 30 mol%, and
b) from 5 to 95% by weight, based on the overall weight of the copolymer, of a shell of an organic polymer of mono- or polyethylenically unsaturated monomers,
and R denotes identical or different monovalent alkyl or alkenyl radicals having 1 to 6 C atoms, aryl radicals or substituted hydrocarbon radicals selected from the group consisting of halogenated hydrocarbon radicals, mercaptoalkyl radicals, cyanoalkyl radicals, aminoalkyl radicals, acyloxyalkyl radicals and hydroxyalkyl radicals.

2. Use according to Claim 1, in which the precrosslinked silicone elastomer particles with an organic-polymer shell are used in the form of their aqueous dispersions, with a solids content of the aqueous dispersions of 10 - 60% by weight.

3. Aqueous coating compositions based on water-soluble or water-dilutable binders, which as a formulating constituent comprise precrosslinked silicone elastomer particles with an organic-polymer shell, where the silicone elastomer particles comprise
a) from 5 to 95% by weight, based on the overall weight of the copolymer, of a core polymer of the general formula (R₂SiO_{2/2})ₓ^{·}(RSiO_{3/2})_{y}·(SiO_{4/2})_{z} where x = from 5 to 99.5 mol%, y = from 0.5 to 95 mol%, z = from 0 to 30 mol%, and
b) from 5 to 95% by weight, based on the overall weight of the copolymer, of a shell of an organic polymer of mono- or polyethylenically unsaturated monomers,
and R denotes identical or different monovalent alkyl or alkenyl radicals having 1 to 6 C atoms, aryl radicals or substituted hydrocarbon radicals selected from the group consisting of halogenated hydrocarbon radicals, mercaptoalkyl radicals, cyanoalkyl radicals, aminoalkyl radicals, acyloxyalkyl radicals and hydroxyalkyl radicals.

4. Use according to Claim 1 and aqueous coating composition according to Claim 3, in which the precrosslinked silicone elastomer particles with an organic-polymer shell comprise
a) from 20 to 80% by weight, based on the copolymer overall weight, of a core polymer (R₂SiO_{2/2})ₓ^{·}(RSiO_{3/2})_{y}·(SiO_{4/2})_{z} where x = from 50 to 99 mol%, y = from 1 to 50 mol%; z = from 0 to 20 mol%; and
b) from 20 to 80% by weight, based on the copolymer overall weight, of a shell of an organic polymer of mono- or polyethylenically unsaturated monomers,
where R has the abovementioned meaning.

5. Use according to Claim 1 and aqueous coating composition according to Claim 3, in which the precrosslinked silicone elastomer particles comprise a core of (R₂SiO_{2/2})ₓ^{·}(RSiO_{3/2})_{y} where x = 80 - 99 mol% and y = 1 - 20 mol%, where R can be identical or different and has the meaning R = methyl and/or 3-methacryloxypropyl, and a shell of poly(methyl methacrylate) or copolymer shells of methyl methacrylate and butyl acrylate and/or glycidyl methacrylate.

6. Use according to Claim 1 and aqueous coating composition according to Claim 3, in which the precrosslinked silicone elastomer particles with an organic-polymer shell have an average particle diameter of from 10 to 300 nm.

7. Use according to Claim 1 and aqueous coating composition according to Claim 3, in which the precrosslinked silicone elastomer particles with an organic-polymer shell have a monomodal particle size distribution with a polydispersity index of not more than σ₂ = 0.2.

8. Use according to Claim 1 and aqueous coating composition according to Claim 3, in which the precrosslinked silicone elastomer particles with an organic-polymer shell are employed in an amount of from 0.5 to 50% by weight, based on the overall weight of silicone elastomer component and binder component, in the aqueous coating formulation comprising binder, water, crosslinker, catalyst, pigment, thickener, filler.

9. Use according to Claim 1 and aqueous coating composition according to Claim 3, in which binders present are water-soluble binders from the group of modified alkyd resins, acrylate resins, linear and branched saturated polyester resins, epoxy resins, shellac and modified phenolic resins or water-dilutable binders from the group of unsaturated and saturated polyester resins, alkyd resin emulsions, polyurethane dispersions, one-component epoxy resin emulsions, emulsifiable two-component epoxy resin systems, dispersible alkyd, phenolic, melamine and urea resins, (meth)acrylate dispersions, (meth)acrylate copolymer dispersions, polystyrene and styrene copolymer dispersions, poly(vinyl ether) dispersions, and polyvinyl chloride and polyvinylidene chloride dispersions.

## Revendications

1. Utilisation de particules élastomères de silicone préalablement réticulées comportant une enveloppe organopolymère comme constituant de formulation dans des compositions de peinture à l'eau à base de liants solubles dans l'eau ou pouvant être dilués dans l'eau, les particules élastomères de silicone contenant
a) 5 à 95% en poids, sur base du poids total du copolymère, d'un polymère de noyau de formule générale (R₂SiO_{2/2})ₓ•(RSiO_{3/2})_{y}•(SiO_{4/2})_{z} avec x = 5 à 99,5% en mole, y = 0,5 à 95% en mole, z = 0 à 30% en mole, et
b) 5 à 95% en poids, sur base du poids total du copolymère, d'une enveloppe d'un organopolymère de monomères une ou plusieurs fois éthyléniquement insaturés,
et R signifie des radicaux alkyle ou alcényle monovalents identiques ou différents avec 1 à 6 atomes de carbone, des radicaux aryle ou des radicaux hydrocarbonés substitués du groupe comprenant des radicaux hydrocarbonés halogénés, des radicaux mercaptoalkyle, des radicaux cyanoalkyle, des radicaux aminoalkyle, des radicaux acyloxyalkyle, des radicaux hydroxyalkyle.

2. Utilisation suivant la revendication 1, dans laquelle les particules élastomères de silicone préalablement réticulées comportant une enveloppe organopolymère sont utilisées sous forme de leurs dispersions aqueuses, avec une teneur en solides des dispersions aqueuses de 10-60% en poids.

3. Compositions de peinture à l'eau à base de liants solubles dans l'eau ou pouvant être dilués dans l'eau qui contiennent comme constituant de formulation des particules élastomères de silicone préalablement réticulées comportant une enveloppe organopolymère, avec les particules élastomères de silicone contenant
a) 5 à 95% en poids, sur base du poids total du copolymère, d'un polymère de noyau de formule générale (R₂SiO_{2/2})ₓ•(RSiO_{3/2})_{y}•(SiO_{4/2})_{z} avec x = 5 à 99,5% en mole, y = 0,5 à 95% en mole, z = 0 à 30% en mole, et
b) 5 à 95% en poids, sur base du poids total du copolymère, d'une enveloppe d'un organopolymère de monomères une ou plusieurs fois éthyléniquement insaturés,
et R signifie des radicaux alkyle ou alcényle monovalents identiques ou différents avec 1 à 6 atomes de carbone, des radicaux aryle ou des radicaux hydrocarbonés substitués parmi le groupe comprenant des radicaux hydrocarbonés halogénés, des radicaux mercaptoalkyle, des radicaux cyanoalkyle, des radicaux aminoalkyle, des radicaux acyloxyalkyle, des radicaux hydroxyalkyle.

4. Utilisation suivant la revendication 1 et composition de peinture à l'eau suivant la revendication 3, dans laquelle les particules élastomères de silicone préalablement réticulées comportant une enveloppe organopolymère contiennent
a) 20 à 80% en poids, sur base du poids total du copolymère, d'un polymère de noyau (R₂SiO_{2/2})ₓ• (RSiO_{3/2})_{y}•(SiO_{4/2})_{z} avec x = 50 à 99% en mole, y = 1 à 50% en mole; z = 0 à 20% en mole, et
b) 20 à 80% en poids, sur base du poids total du copolymère, d'une enveloppe d'un organopolymère de monomères une ou plusieurs fois éthyléniquement insaturés,
R ayant la signification mentionnée ci-dessus.

5. Utilisation suivant la revendication 1 et composition de peinture à l'eau suivant la revendication 3, dans laquelle les particules élastomères de silicone préalablement réticulées contiennent un noyau de (R₂SiO_{2/2})ₓ•(RSiO_{3/2})_{y} avec x = 80-99% en mole et y = 1-20% en mole, R pouvant être identique ou différent et a la signification R = méthyle et/ou 3-méthacryloxypropyle, et une enveloppe de poly(méthylméthacrylate) ou des enveloppes de copolymère de méthylméthacrylate et de butylacrylate ou, selon le cas, de glycidylméthacrylate.

6. Utilisation suivant la revendication 1 et composition de peinture à l'eau suivant la revendication 3, dans laquelle les particules élastomères de silicone préalablement réticulées avec une enveloppe organopolymère présentent un diamètre particulaire moyen de 10 à 300 nm.

7. Utilisation suivant la revendication 1 et composition de peinture à l'eau suivant la revendication 3, dans laquelle les particules élastomères de silicone préalablement réticulées avec une enveloppe organopolymère présentent une répartition de taille particulaire monomodale avec un indice de polydispersité de maximum σ₂ = 0,2.

8. Utilisation suivant la revendication 1 et composition de peinture à l'eau suivant la revendication 3, dans laquelle les élastomères de silicone préalablement réticulés avec une enveloppe organopolymère sont utilisés dans une quantité de 0,5 à 50% en poids, sur base du poids total du composant d'élastomères de silicone et du composant liant, dans la formulation de peinture à l'eau contenant un liant, de l'eau, un agent de réticulation, un catalyseur, un pigment, un épaississant, une charge.

9. Utilisation suivant la revendication 1 et composition de peinture à l'eau suivant la revendication 3, dans laquelle sont contenus comme liants des liants solubles dans l'eau parmi le groupe des résines alkyde, des résines acrylate, des résines de polyester saturées linéaires et ramifiées, des résines époxyde, de gomme-laque et des résines de phénol modifiées ou des liants pouvant être dilués dans l'eau parmi le groupe des résines de polyester insaturées et saturées, des émulsions de résines alkyde, des dispersions de polyuréthanne, des émulsions de résine époxyde à un composant, des systèmes de résine époxyde à deux composants pouvant être émulsionnés, des résines dispersables alkyde, de phénol, de mélamine et d'urée, des dispersions de (méth)acrylate, des dispersions de (méth)acrylate/copolymère, des dispersions de polystyrène et des dispersions de styrène/copolymère, des dispersions de poly(vinyléther), ainsi que des dispersions de poly(chlorure de vinyle) et de poly(chlorure de polyvinylidène).
